# EUROPEAN PATENT SPECIFICATION

(11) **EP 2 836 037 B1**
(45) Date of publication and mention of the grant of the patent: **10.10.2018**
(21) Application number: 13179511.4
(22) Date of filing: 07.08.2013
(51) Int. Cl.: H04W 72/00, H04W 4/90, H04W 4/06

(54) **Method, device, computer program and computer program product for broadcasting a road hazard warning**
Verfahren, Vorrichtung, Computerprogramm und Computerprogrammprodukt zum Übertragen einer Straßenwarnmeldung
Procédé, dispositif, programme informatique et produit de programme d'ordinateur pour la diffusion d'un avertissement de danger sur la route

(43) Date of publication of application: 11.02.2015
(73) Proprietor: Bayerische Motoren Werke Aktiengesellschaft, 80809 München (DE)
(72) Inventor: Dr.-Ing. Gozalvez Serrano, David, 80639 München (DE); Calabuig Gaspar, Jorge, 46510 Quartell, Valencia (ES); Prof. Dr. Monserrat Del Rio, Jose Francisco, 46018 Valencia (ES)

(56) References cited:
- MICHELLE WETTERWALD: "A case for using MBMS in geographical networking", INTELLIGENT TRANSPORT SYSTEMS TELECOMMUNICATIONS,(ITST),2009 9TH INTERNATIONAL CONFERENCE ON, IEEE, PISCATAWAY, NJ, USA, 20 October 2009 (2009-10-20), pages 309-313, XP031619170, ISBN: 978-1-4244-5346-7
- "Intelligent Transport Systems (ITS); Framework for Public Mobile Networks in Cooperative ITS (C-ITS)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG2, no. V1.1.1, 1 February 2012 (2012-02-01), XP014069748,
- DEUTSCHE TELEKOM ET AL: "Requirement for provision of location information in eMBMS", 3GPP DRAFT; R2-113826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 15 August 2011 (2011-08-15), XP050539662, [retrieved on 2011-08-15]
- "Intelligent Transport Systems (ITS); Vehicular Communications; Basic Set of Applications; Part 3: Specifications of Decentralized Environmental Notification Basic Service", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG1, no. V1.2.0, 1 August 2013 (2013-08-01), XP014156890,

## Description

The invention relates to a method for broadcasting a road hazard warning in an intelligent transport system. The invention relates further to a corresponding device. The invention relates further to a computer program and a computer program product for broadcasting the road hazard warning.

Intelligent transport systems employ wireless mobile communications in order to increase traffic efficiency and safety. Road hazard warnings are used in intelligent transport systems to inform a user of a presence of an incident or an obstacle in a proximity of the user.

US 8,175,069 B2 discloses a method for resource management for Multimedia Broadcast Multicast Services (MBMS).

US 2011/0019589 A1 discloses a control method of a single frequency network.

In Michelle Wetterwald: "A case for using MBMS in geographical networking", INTELLIGENT TRANSPORT SYSTEMS TELECOMMUNICATIONS,(ITST),2009 9TH INTERNATIONAL CONFERENCE ON, IEEE, PISCATAWAY, NJ, USA, 20 October 2009 (2009-10-20), pages 309-313, ISBN: 978-1-4244-5346-7 a process for broadcasting road hazard warnings is disclosed for a MBMS environment. At the network layer of broadcast packages some geographic information is inserted together with a destination address to identify a target reception area. The packets enter the cellular network at a Broadcast/Multicast Service Center (BM-SC) in which the received information is searched for the geographic information. Within the BM-SC, this information is used as defining the target area and is correlated with a database of network topology. The BM-SC determines a refined set of base stations located in that zone.

The technical report "Intelligent Transport Systems (ITS); Framework for Public Mobile Networks in Cooperative ITS (C-ITS)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG2, no. VI.1.1, 1 February 2012 (2012-02-01), ETSI TR 102 962 V1.1.1 is directed to the applicability of 3G and 4G mobile network access to support application scenarios in the field of ITS. In this context, an evolved Multimedia Broadcast Multicast Service (eMBMS) architecture was taken into consideration for use in an MBMS single frequency network (MBSFN) such as a Long Term Evolution (LTE) network. The eMBMS architecture comprises a logical entity called Multi-cell/multicast Coordination Entity (MCE) which controls the allocation of radio resources.

In the document DEUTSCHE TELEKOM ET AL: "Requirement for provision of location information in eMBMS", 3GPP DRAFT; R2-113826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 15 August 2011 (2011-08-15), 3GPP TSG-RAN WG2 Meeting #75 (Athen, Greece, 22th-26th August 2011), it was proposed to provide a cell and MBSFN layout independent configuration of a eMBMS service/session validity when delivering hazard warning messages to cars via eMBMS.

In the document "Intelligent Transport Systems (ITS); Vehicular Communications; Basic Set of Applications; Part 3: Specifications of Decentralized Environmental Notification Basic Service", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG1, no. V1.2.0, 1 August 2013 (2013-08-01), Draft ETSI EN 302 637-3 V 1.2.0, syntax and semantics for a Decentralized Environmental Notification Message (DENM) and a DENM protocol handling are proposed which may be useful for ITS applications.

The object of the invention is to create a method and a corresponding device, which contribute to broadcasting a road hazard warning with a high efficiency.

This object is achieved by the features of the independent claims. Advantageous embodiments of the invention are given in the sub-claims. The embodiments and/or examples of the following description which are not covered by the appended claims are considered as not being part of the present invention. The invention is distinguished by a method for broadcasting a road hazard warning in an intelligent transport system with multiple Multicast-Broadcast Single Frequency Network areas, in the following abbreviated as MBSFN areas. The invention is further distinguished by a corresponding device for broadcasting the road hazard warning in the intelligent transport system with multiple MBSFN areas. The invention is further distinguished by a corresponding computer program and by a corresponding computer program product. The Method comprises the following steps: The road hazard warning is provided. Dependent on the road hazard warning, a target area for providing the road hazard warning is determined. Dependent on the target area, one MBSFN area of the multiple MBSFN areas is chosen. The road hazard warning along with an information of the chosen MBSFN area is provided for broadcasting the road hazard warning in the chosen MBSFN area.

Broadcasting technologies can deliver road hazard warnings to many users inside a certain geographical area in a more efficient way, that is to say by using a significantly lower amount of network resources as compared with a unicast delivery mode.

The intelligent transport system is for example an intelligent transport system according to a standard of the European Telecommunications Standards Institute ETSI. The intelligent transport system is for example an intelligent transport system according to the standard "Intelligent Transport System (ITS); Framework for Public Mobile Networks in Cooperative ITS (C-ITS), ETSI Technical Report TR 102 962", in particular to Rev. 1.1.1, 2012.

The wireless communication standard Long Term evolution, abbreviated as LTE, of the 3rd Generation Partnership Project abbreviated as 3GPP, supports Enhanced Multimedia Broadcast Multicast Services, abbreviated as E-MBMS, in order to enable efficient broadcasting services, for example according to the standard "Evolved Universal Terrestrial Radio Access (E-UTRA) and Evolved Universal Terrestrial Radio Access Network (E-UTRAN); Overall description; Stage 2 (Release 11), 3GPP Technical Specification TS 36.300" in particular to v11.4.0, December 2012. One feature of E-MBMS is the operation of single frequency networks, abbreviated as SFN. In single frequency networks multiple cells are synchronized and transmit simultaneously the same content in the same frequency carriers. These cells constitute the so called MBSFN area. Each cell can belong to several MBSFN areas, wherein each of the several MBSFN areas contains a different set of cells. In particular each cell can belong to a maximum of 256 MBSFN areas. Due to specifications of LTE concerning E-MBMS the set of cells of these MBSFN areas cannot be changed dynamically, for example according to 3GPP TS 36.300 v11.4.0. Thanks to the use of orthogonal frequency divisional multiplexing, abbreviated as OFDM, the transmission in MBSFN areas is improved so that the signal quality in terms of received signal to interference plus noise ratio, abbreviated as SINR, is improved as compared with a non-single frequency network operation. The higher the number of cells that are synchronized in the SFN, the higher the SINR. OFDM is a method for modulation, which uses multiple orthogonal carriers for a digital data transmission, wherein a crosstalk between signals is reduced by the use of the orthogonality of the carriers, which are modulated onto nearby carriers. A further definition of OFDM is for example stated in "L. Litwin and M. Pugel, The principles of OFDM, RF Design, no. 1, pp. 30-48, 2001".

By providing the road hazard warning with the information of the chosen MBSFN area for broadcasting the road hazard warning in the chosen MBSFN area in a mobile network a high efficiency of the mobile network can be achieved for broadcasting the road hazard warning in the chosen MBSFN area. Hereby a reduction of the number of network resources required for the transmission of the road hazard warning can be achieved compared to the case in which the road hazard warning is broadcasted in non-single frequency network operation. Further, the SINR is increased, as compared with the case in which the road hazard warning is broadcasted in non-single frequency network operation. In particular, the SINR is improved due to the higher SINR that is achieved by increasing the number of cells that participate in the MBSFN area. By the improved SINR a more reliable reception of road hazard warnings can be achieved, which in turn improves the accuracy of traffic safety systems.

According to one embodiment, the MBSFN area of the multiple MBSFN areas which has a largest intersection with the target area is chosen.

By choosing the MBSFN area with the largest intersection it can be ensured that the road hazard warning is broadcasted to relevant mobile entities, which want to be informed about the road hazard warning.

According to a further embodiment if more than one MBSFN area has the largest intersection with the target area, the smallest MBSFN area of the MBSFN areas with the largest intersection with the target area is chosen.

The smaller the chosen MBSFN area, the better the efficiency of the mobile network and the better use of the network resources, because the smaller the chosen MBSFN area, the fewer the network resources, which are wasted due to lack of interest.

According to a further embodiment, the target area is a destination area according to ETSI TS 102 637-3.

The destination area according to ETSI TS 102 637-3, particularly to "Intelligent Transport Systems (ITS); Vehicular Communications; Basic Set of Applications; Part 3: Specification of Decentralized Environmental Notification Basic Service, ETSI TS 102 637-3, VI.1.1, September 2010", is a geographical area in which the road hazard warning shall actually be transmitted. The destination area should cover an entire relevance area according to ETSI TS 102 637-3, particularly to ETSI TS 102 637-3 VI.1.1. The relevance area is a minimum area in which the road hazard warning must be disseminated. If the target area is the destination area, then the standard ETSI TS 102 637-3, particularly ETSI TS 102 637-3 V1.1.1, can be used to determine the target area. Thus a standardized determination of the target area is possible.

According to a further embodiment the step wherein dependent on the target area, one MBSFN area of the multiple MBSFN areas is chosen is conducted by a Multi-cell/Multicast Coordination Entity, abbreviated as MCE.

The MCE is a control entity responsible for an admission control and a allocation of E-MBMS resources in LTE networks. The MCE is for example a MCE according to the standard "Evolved Universal Terrestrial Radio Access (E-UTRA) and Evolved Universal Terrestrial Radio Access Network (E-UTRAN); Overall description; Stage 2 (Release 11), 3GPP Technical Specification TS 36.300", in particular to v11.4.0, December 2012. If the step wherein dependent on the target area, one MBSFN area of the multiple MBSFN areas is chosen is conducted by the MCE, no external server is needed for this step. By that a very accurate choosing can be performed, as the MCE possesses full knowledge of the MBSFN areas that are available in any target area.

According to a further embodiment the step wherein dependent on the target area, one MBSFN area of the multiple MBSFN areas is chosen is conducted by a server.

The server is particularly a central server and/or, for example, a so-called ITS-server. The ITS-Server is a logical entity that is for example designed to aggregate inputs received from several sources including vehicles on a road, road side units as well as external information. The ITS-Server is for example further designed to decide if information dependent on the inputs has to be disseminated, for example after some kind of consolidation process. The ITS-Server is for example a ITS-Server according to the standard "Intelligent Transport System (ITS); Framework for Public Mobile Networks in Cooperative ITS (C-ITS), ETSI Technical Report TR 102 962", in particular to Rev. 1.1.1, 2012. By that a centralized choosing of the MBSFN area is possible.

The device is for example the server, in particular the central server and/or the ITS-Server.

According to another aspect the invention is distinguished by a computer program, wherein the computer program is designed to execute the method for broadcasting the road hazard warning or an advantageous embodiment of the method by its execution on a data processing device.

According to a further aspect the invention is distinguished by a computer program product comprising executable program code, wherein the program code executes the method for broadcasting the road hazard warning or an advantageous embodiment of the method by its execution on a data processing device.

The computer program product comprises in particular a means which is readable by the data processing device and on which the program code is stored.

Exemplary embodiments of the invention are explained in the following with the aid of schematic drawings.

These are as follows:
- Figure 1: a mobile network;
- Figure 2: a first MBSFN area of the mobile network;
- Figure 3: a second MBSFN area of the mobile network;
- Figure 4: a third MBSFN area of the mobile network;
- Figure 5: a fourth MBSFN area of the mobile network; and
- Figure 6: a flowchart for broadcasting a road hazard warning.

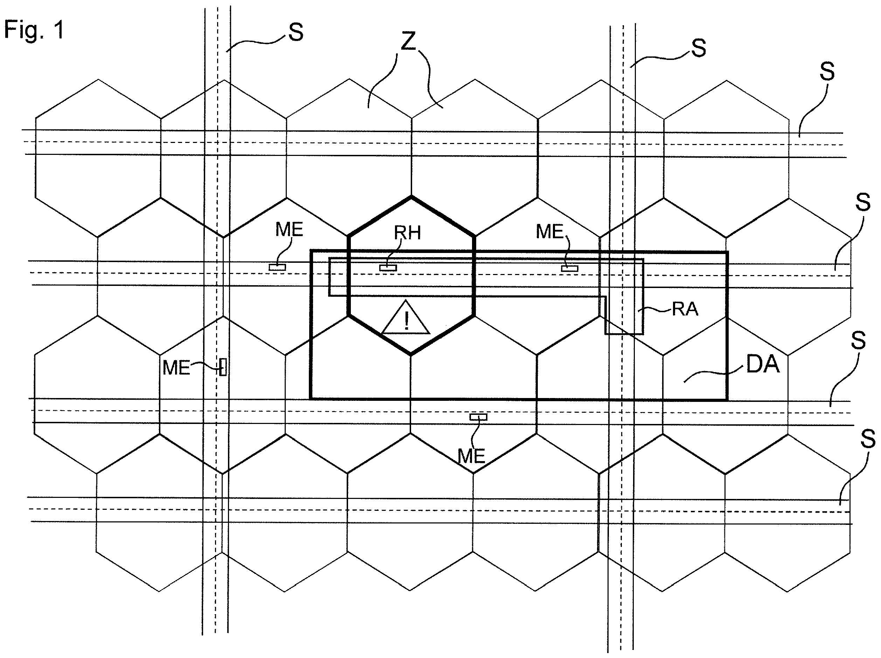

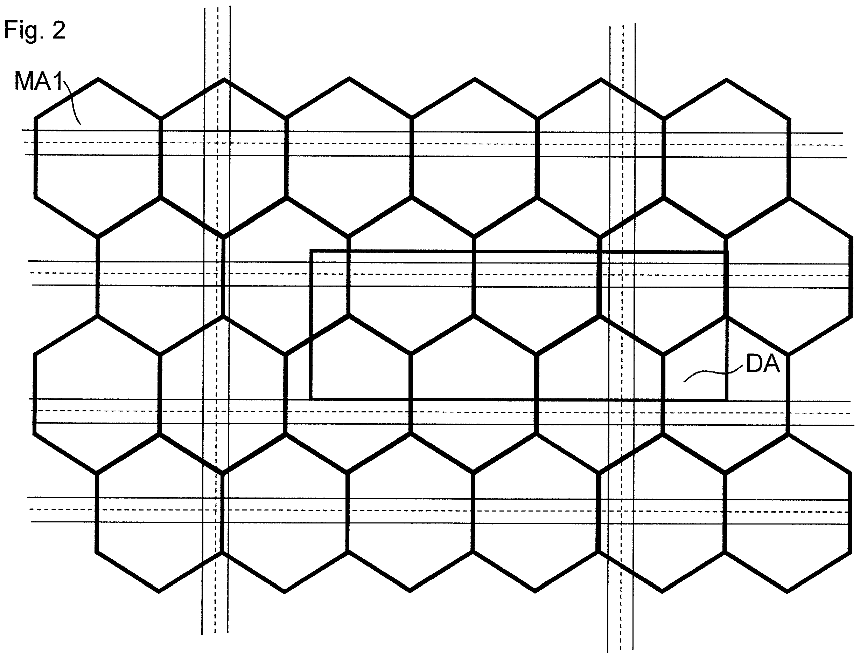

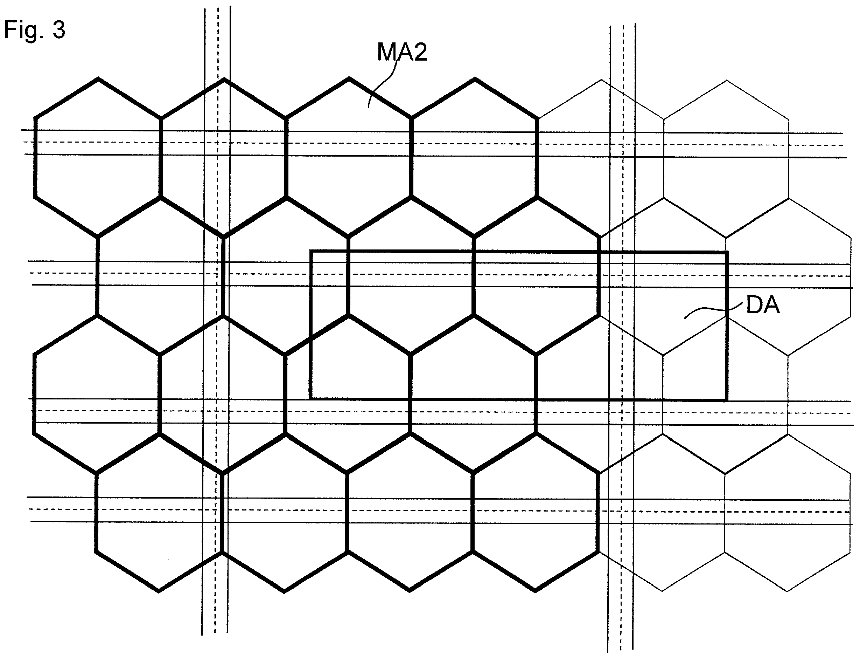

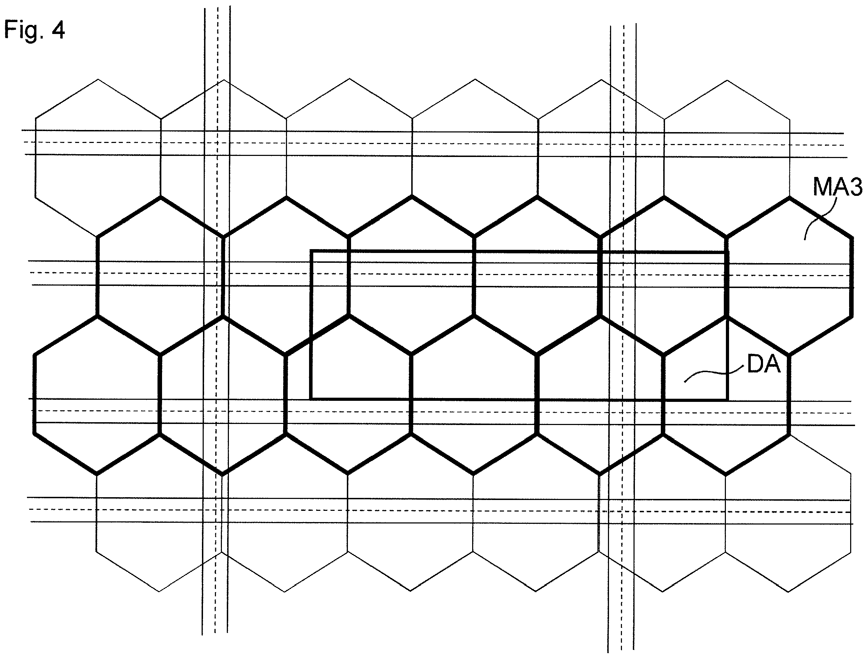

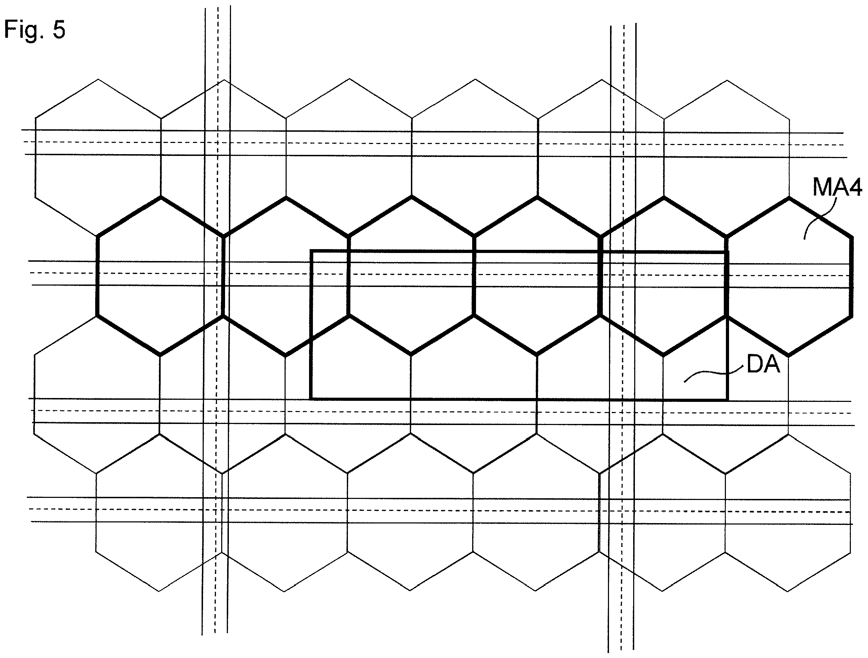

Figure 1 shows a mobile network with multiple cells Z. The cells form multiple MBSFN areas, as for example a first MBSFN area MA1 (see Figure 2), a second MBSFN area MA2 (see Figure 3), a third MBSFN area MA3 (see Figure 4) and a fourth MBSFN area MA4 (see Figure 5).

The mobile network is located over several streets S. One street S of the several streets S in one cell Z comprises a road hazard RH, such as for example an incident or an obstacle.

Multiple mobile entities ME which are, for example, vehicles are located on the several streets S. The mobile entities ME comprise, for example, a sensor for detecting the road hazard RH. The mobile entities ME further comprise, for example, a transponder for sending a road hazard information RHI to a not shown server SE, which comprises an information to the Road Hazard RH, as for example a location of the Road Hazard RH.

The server SE is, for example, an ITS-Server. The server SE is, for example, located inside or outside of the mobile network.

The server SE is, for example, designed to determine a road hazard warning RHW dependent on the road hazard information RHI. The road hazard warning RHW comprises for example a warning information to the Road Hazard RH. The server SE is, for example, designed to determine a target area DA dependent on the road hazard warning RHW for providing the road hazard warning RHW.

The server SE is, for example, further designed to send an information to the target area DA to a Multi-cell/Multicast Coordination Entity MC of the mobile network and to send the road hazard warning RHW to an intelligent transport system for dissemination, as for example to the mobile network.

The Multi-cell/Multicast Coordination Entity MC is, for example, designed to receive data from the server SE, as for example the information to the target area DA. The Multi-cell/Multicast Coordination Entity MC is for example part of the intelligent transport system.

The server SE and/or the Multi-cell/Multicast Coordination Entity MC are, for example, further designed to choose one MBSFN area of the multiple MBSFN areas dependent on the target area DA.

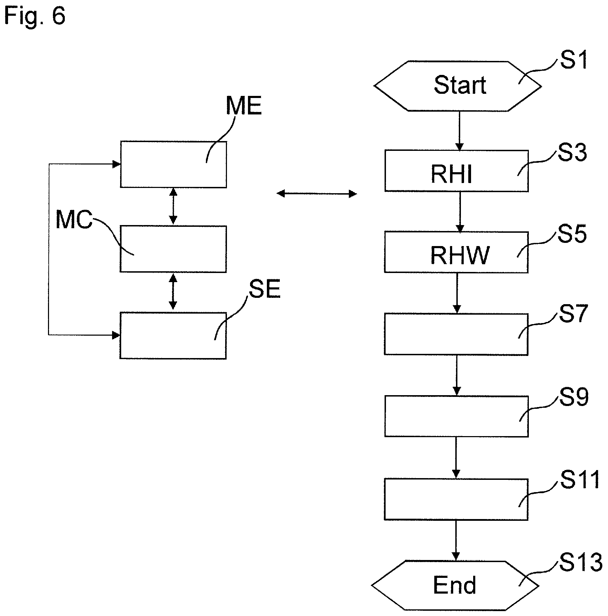

Figure 6 shows a flowchart of a program for broadcasting the road hazard warning RHW. The program can be executed on the server SE. Alternatively the program can be executed distributed on the Multi-cell/Multicast Coordination Entity MC and on the server SE.

In a step S1 the program is started and, for example, variables are initialized.

In a step S3 the road hazard information RHI is provided. The road hazard information RHI is, for example, provided by one of the mobile entities ME via the transponder of the mobile entity ME to the server SE.

In a step S5 the road hazard warning RHW is determined dependent on the road hazard information RHI and further the road hazard warning RHW is provided.

In a step S7 the target area DA for providing the road hazard warning RHW is determined dependent on the road hazard warning RHW. The target area DA is, for example, a destination area according to ETSI TS 102 637-3, particularly to ETSI TS 102 637-3 VI.1.1. The destination area covers for example an entire relevance area RA (see Figure 1) according to ETSI TS 102 637-3, particularly to ETSI TS 102 637-3 VI.1.1, which for example is also determined in the step S7.

In a step S9 one MBSFN area of the multiple MBSFN areas is chosen dependent on the determined target area DA. For example, the MBSFN area of the multiple MBSFN areas is chosen which has the largest intersection with the target area DA. In the example of the Figures 1 to 5, the MBSFN areas with the largest intersection with the target area DA are the first MBSFN area MA1 (Figure 2) and the third MBSFN area MA3 (Figure 4). For example, if more than one MBSFN area has the largest intersection with the target area DA, the smallest MBSFN area of the MBSFN areas with the largest intersection with the target area DA is chosen. In the example of the Figures 1 to 5, the smallest MBSFN area of the MBSFN areas with the largest intersection is the third MBSFN area MA3 (Figure 4). The step S7 can be conducted by the Multi-cell/Multicast Coordination Entity MC and/or by the server SE.

In a step S11 the road hazard warning RHW along with an information of the chosen MBSFN area is provided for broadcasting the road hazard warning RHW in the chosen MBSFN area.

In a step S13 the program is stopped and can, for example, be restarted in the step S1.

After providing the road hazard warning RHW along with the information of the chosen MBSFN area, for example to the intelligent transport system, the road hazard warning RHW can be broadcasted in the chosen MBSFN area.

By providing the road hazard warning RHW with the information of the chosen MBSFN area for broadcasting the road hazard warning RHW in the chosen MBSFN area in the mobile network a high efficiency of the mobile network can be achieved for broadcasting the road hazard warning RHW in the chosen MBSFN area.

### Reference Signs

- DA: target area
- MA1 to MA4: first to fourth MBSFN area
- MC: Multi-cell/Multicast Coordination Entity
- ME: mobile entity
- RA: relevance area
- RH: road hazard
- RHI: road hazard information
- RHW: road hazard warning
- S: street
- SE: server
- Z: cell

## Claims

1. Method for broadcasting a road hazard warning (RHW) in an intelligent transport system with multiple Multicast-Broadcast Single Frequency Network areas, MBSFN areas, in which cells are synchronized and transmit simultaneously the same content in the same frequency carriers, comprising the following steps:
- the road hazard warning (RHW) is provided,
- dependent on the road hazard warning (RHW) a target area (DA) for providing the road hazard warning (RHW) is determined,
- dependent on the target area (DA) one MBSFN area of the multiple MBSFN areas is chosen,
- the road hazard warning (RHW) along with an information of the chosen MBSFN area is provided for broadcasting the road hazard warning (RHW) in the chosen MBSFN area,
- the MBSFN area of the multiple MBSFN areas is chosen which has a largest intersection with the target area, (DA), and
- if more than one MBSFN area have the largest intersection with the target area (DA), the smallest MBSFN area of the MBSFN areas with the largest intersection with the target area (DA) is chosen.

2. Method according to claim 1, wherein the target area (DA) is a destination area according to ETSI TS 102 637-3.

3. Method according to any one of the claims 1 to 2,
wherein the step wherein dependent on the target area (DA), one MBSFN area of the multiple MBSFN areas is chosen is conducted by a server (SE).

4. Method according to any one of the claims 1 to 2,
wherein the step wherein dependent on the target area (DA), one MBSFN area of the multiple MBSFN areas is chosen is conducted by a Multi-cell/Multicast Coordination Entity (MC).

5. Device, wherein the device is designed to execute a method according to any one of the claims 1 to 4.

6. Computer program, wherein the computer program is designed to execute a method according to any one of the claims 1 to 4 by its execution on a data processing device.

7. Computer program product comprising executable program code, wherein the program code executes a method according to any one of the claims 1 to 4 by its execution on a data processing device.

## Patentansprüche

1. Verfahren zum Übertragen einer Straßengefahrenwarnung (RHW) in einem intelligenten Transportsystem mit mehreren Multicast-Broadcast-Einzelfrequenznetz-Bereichen bzw. MBSFN-Bereichen, in denen Zellen synchronisiert sind und denselben Inhalt in denselben Frequenzträgern gleichzeitig übermitteln, umfassend die folgenden Schritte:
- die Straßengefahrenwarnung (RHW) wird bereitgestellt,
- in Abhängigkeit von der Straßengefahrenmeldung (RHW) wird ein Zielbereich (DA) zum Bereitstellen der Straßengefahrenwarnung (RHW) bestimmt,
- in Abhängigkeit vom Zielbereich (DA) wird ein MBSFN-Bereich der mehreren MBSFN-Bereiche ausgewählt,
- die Straßengefahrenwarnung (RHW) zusammen mit einer Information über den ausgewählten MBSFN-Bereich wird zum Übertragen der Straßengefahrenwarnung (RHW) im ausgewählten MBSFN-Bereich bereitgestellt,
- der MBSFN-Bereich der mehreren MBSFN-Bereiche wird ausgewählt, der eine größte Überschneidung mit dem Zielbereich (DA) aufweist, und
- falls mehr als ein MBSFN-Bereich die größte Überschneidung mit dem Zielbereich (DA) aufweist, wird der kleinste MBSFN-Bereich der MBSFN-Bereiche mit der größten Überschneidung mit dem Zielbereich (DA) ausgewählt.

2. Verfahren nach Anspruch 1, wobei der Zielbereich (DA) ein Destinationsbereich gemäß ETSI TS 102 637-3 ist.

3. Verfahren nach einem der Ansprüche 1 bis 2,
wobei der Schritt, bei dem in Abhängigkeit vom Zielbereich (DA) ein MBSFN-Bereich der mehreren MBSFN-Bereiche ausgewählt wird, durch einen Server (SE) durchgeführt wird.

4. Verfahren nach einem der Ansprüche 1 bis 2,
wobei der Schritt, bei dem in Abhängigkeit vom Zielbereich (DA) ein MBSFN-Bereich der mehreren MBSFN-Bereiche ausgewählt wird, durch eine Mehrzellen-/Multicast-Koordinationsentität (MC) durchgeführt wird.

5. Vorrichtung, wobei die Vorrichtung zum Ausführen eines Verfahrens nach einem der Ansprüche 1 bis 4 konzipiert ist.

6. Computerprogramm, wobei das Computerprogramm zum Ausführen eines Verfahrens nach einem der Ansprüche 1 bis 4 durch seine Ausführung auf einer Datenverarbeitungsvorrichtung konzipiert ist.

7. Computerprogrammprodukt, das ausführbaren Programmcode umfasst, wobei der Programmcode ein Verfahren nach einem der Ansprüche 1 bis 4 durch seine Ausführung auf einer Datenverarbeitungsvorrichtung ausführt.

## Revendications

1. Procédé permettant de diffuser un avertissement d'un danger routier (RHW) dans un système de transport intelligent ayant plusieurs zones de réseau de diffusion-multidiffusion à fréquence unique, zones de MBSFN dans lesquelles des cellules sont synchronisées et transmettent simultanément le même contenu dans les mêmes porteuses de fréquence, comprenant les étapes suivantes consistant à :
- fournir un avertissement d'un danger routier (RHW),
- déterminer en fonction de l'avertissement d'un danger routier (RHW) une zone cible (DA) pour fournir l'avertissement d'un danger routier (RHW),
- choisir en fonction de la zone cible (DA), une zone de MBSFN parmi les zones de MBSFN,
- fournir l'avertissement d'un danger routier (RHW) avec l'information de la zone de MBSFN choisie pour émettre l'avertissement d'un danger routier (RHW) dans la zone de MBSFN choisie,
- choisir parmi les zones de MBSFN la zone de MBSFN, ayant la plus grande intersection avec la zone cible (DA), et
- si plus d'une zone de MBSFN ont la plus grande intersection avec la zone cible (DA), choisir parmi les zones de MBSFN la plus petite zone de MBSFN ayant la plus grande intersection avec la zone cible (DA).

2. Procédé conforme à l'une des revendications précédentes, selon lequel
la zone cible (DA) est une zone de destination conformément à ETSI TS 102 637-3.

3. Procédé conforme à l'une quelconque des revendications 1 et 2,
selon lequel l'étape dans laquelle on choisit en fonction de la zone cible (DA) une zone de MBSFN parmi les zones de MBSFN est mise en oeuvre par un serveur (SE).

4. Procédé conforme à l'une quelconque des revendications 1 et 2,
selon lequel l'étape dans laquelle on choisit en fonction de la zone cible (DA) une zone de MBSFN parmi les zones de MBSFN est mis en oeuvre par une entité de coordination multi-cellules multidiffusion (MC).

5. Dispositif permettant de mettre en oeuvre le procédé conforme à l'une quelconque des revendications 1 à 4.

6. Programme d'ordinateur permettant de mettre en oeuvre le procédé conforme à l'une quelconque des revendications 1 à 4, s'il est mis en oeuvre sur un dispositif de traitement de données.

7. Produit programme d'ordinateur renfermant un code de programme exécutable, ce code de programme mettant en oeuvre le procédé conforme à l'une quelconque des revendications 1 à 4, lorsqu'il est mis en oeuvre sur un dispositif de traitement de données.
